# EUROPEAN PATENT APPLICATION

(11) **EP 3 002 701 A1**
(43) Date of publication of application: **06.04.2016**
(21) Application number: 14888557.7
(22) Date of filing: 27.06.2014
(51) Int. Cl.: G06F 21/31

(54) **PROGRAM DATA UPDATING METHOD AND DEVICE**

(71) Applicant: Huawei Technologies Co., Ltd, Shenzhen, Guangdong 518129 (CN)
(72) Inventor: GAO, Wei, Shenzhen Guangdong 518129 (CN)
(74) Representative: Thun, Clemens
(86) International application number: PCT/CN2014/081027
(87) International publication number: WO 2015/196479

(57) **Abstract**

The present invention discloses a method and a device for updating program data, which belong to the field of data processing technologies. The method includes: receiving an input instruction of a user; and determining a startup mode of a terminal device according to the input instruction of the user, and sending, to the terminal device, a control instruction that is used to control the terminal device to enter the determined startup mode, where if it is determined that the startup mode of the terminal device is a forcibly loading startup mode, the control instruction is a first control instruction for entering the forcibly loading startup mode, where the forcibly loading startup mode is a startup mode in which the terminal device acquires program data in a storage card and performs data updating according to the acquired program data. In the present invention, a host device determines that a startup mode of a terminal device is a forcibly loading startup mode, and the terminal device performs data updating according to program data acquired from a storage card, so as to implement program data updating of the terminal device by means of forcibly loading without in a manner of updating by using a network or updating by dismantling a housing. Therefore, a success rate of data updating is improved.

## Description

### TECHNICAL FIELD

The present invention relates to the field of data processing technologies, and in particular, to a method and a device for updating program data.

### BACKGROUND

With the continuous development of data processing technologies, an SD (Secure Digital, secure digital) form product is used more widely because of a good storage characteristic of a built-in SD storage chip of the SD form product, and there is a trend of integrating a wireless communications module. Program data stored in the SD form product needs to be updated at an interval; therefore, how to update the program data is a problem on which people focus.

In a relevant technology, two methods for updating program data are provided. In a first method, an SD form product includes a wireless communications component, a network is accessed by using the wireless communications component, and the program data is updated online by using the network; and in a second method, a housing of an SD form product needs to be dismantled to obtain a PCB (Printed Circuit Board, printed circuit board) that has a USB (Universal Serial Bus, universal serial bus) interface, so that a storage chip downloads, from a connected computer through the USB interface, program data that needs to be updated for updating.

In a process of implementing the present invention, the inventor finds that the foregoing methods have at least the following problem:
In the first method, because a wireless network needs to be accessed, if the network is unavailable, or the network is inaccessible because the wireless communications component is damaged, in this case, the program data cannot be updated, and therefore a success rate of data updating is relatively low. In the second method, because the housing of the SD form product needs to be dismantled to obtain the storage chip in the SD form product. However, a structure of the SD form product is generally not dismantlable, and as a result, in a process of dismantling the housing, the housing of the product and a relevant PCB pad may be damaged; then, in this case, the program data cannot be updated, and therefore a success rate of data updating is relatively low.

### SUMMARY

To solve a problem in the prior art, embodiments of the present invention provide a method and a device for updating program data. The technical solutions are as follows:
According to a first aspect, a method for updating program data is provided, where the method is applied in a host device, and the method includes:
   receiving an input instruction of a user; and
   determining a startup mode of a terminal device according to the input instruction of the user, and sending, to the terminal device, a control instruction that is used to control the terminal device to enter the determined startup mode, where
   if it is determined that the startup mode of the terminal device is a forcibly loading startup mode, the control instruction is a first control instruction for entering the forcibly loading startup mode, where the forcibly loading startup mode is a startup mode in which the terminal device acquires program data in a storage card and performs data updating according to the acquired program data.

With reference to the first aspect, in a first possible implementation manner of the first aspect, the startup mode of the terminal device includes the forcibly loading startup mode and a normal startup mode.

With reference to the first possible implementation manner of the first aspect, in a second possible implementation manner of the first aspect, if it is determined that the startup mode of the terminal device is the normal startup mode, the control instruction is a second control instruction for entering the normal startup mode, where the normal startup mode is a startup mode in which the terminal device reads data in a built-in non-volatile flash memory and normally starts according to the read data.

With reference to the first aspect, and any one possible implementation manner of the first possible implementation manner and the second possible implementation manner of the first aspect, in a third possible implementation manner of the first aspect, after the sending, to the terminal device, a control instruction that is used to control the terminal device to enter the determined startup mode, the method further includes:
receiving process data of performing data updating sent by the terminal device, and displaying, according to the process data, a process in which the terminal device performs data updating.

According to a second aspect, a method for updating program data is provided, where the method is applied in a terminal device, and the method includes:
receiving a control instruction sent by a host device, where the control instruction is used to control the terminal device to enter a startup mode of the terminal device, where the startup mode is determined by the host device;
if the control instruction is a first control instruction for entering a forcibly loading startup mode, entering the forcibly loading startup mode according to the first control instruction; and
acquiring program data in a storage card and performing data updating according to the acquired program data.

With reference to the second aspect, in a first possible implementation manner of the second aspect, the method further includes: if the control instruction is a second control instruction for entering a normal startup mode, entering the normal startup mode according to the second control instruction; and
reading data in a built-in non-volatile flash memory and normally starting according to the read data.

With reference to the second aspect or the first possible implementation manner of the second aspect, in a second possible implementation manner of the second aspect, after the performing data updating according to the acquired program data, the method further includes:
sending, to the host device, process data of performing data updating, where the process data of data updating data is used by the host device to display a process in which the terminal device performs data updating.

According to a third aspect, a host device is provided, where the host device includes a user input module, a processor, a first interface, and a second interface, where:
the first interface is connected to a terminal device;
the second interface is connected to a storage card, and the storage card stores program data that is used by the terminal device to perform data updating;
the user input module is configured to receive an input instruction of a user; and
the processor is configured to determine a startup mode of the terminal device according to the input instruction of the user received by the user input module, and send, to the terminal device, a control instruction that is used to control the terminal device to enter the determined startup mode, where if it is determined that the startup mode of the terminal device is a forcibly loading startup mode, the control instruction sent by the processor is a first control instruction for entering the forcibly loading startup mode, where the forcibly loading startup mode is a startup mode in which the terminal device acquires the program data in the storage card and performs data updating according to the acquired program data.

With reference to the third aspect, in a first possible implementation manner of the third aspect, if it is determined that the startup mode of the terminal device is a normal startup mode, the control instruction sent by the processor is a second control instruction for entering the normal startup mode, where the normal startup mode is a startup mode in which the terminal device reads data in a built-in non-volatile flash memory and normally starts according to the read data.

With reference to the third aspect, in a second possible implementation manner of the third aspect, the host device further includes a first control circuit; and
the processor is configured to drive, by using the first control circuit, the first interface to send, to the terminal device, the control instruction that is used to control the terminal device to enter the determined startup mode.

With reference to the third aspect, and any one possible implementation manner of the first possible implementation manner and the second possible implementation manner of the third aspect, in a third possible implementation manner of the third aspect, the host device further includes a display part;
the first interface is configured to receive process data of performing data updating by the terminal device, wherein the process data is sent by the terminal device; and
the display part is configured to display, according to the process data received by the first interface, a process in which the terminal device performs data updating.

According to a fourth aspect, a terminal device is provided, where the terminal device includes a processor and a first interface, where:
the first interface is configured to connect to a host device;
the first interface is configured to receive a control instruction sent by the host device, where the control instruction is used to control the terminal device to enter a startup mode of the terminal device, where the startup mode is determined by the host device; and
the processor is configured to, when the control instruction received by the first interface is a first control instruction for entering a forcibly loading startup mode, enter the forcibly loading startup mode according to the first control instruction; and acquire program data in a storage card, and perform data updating according to the acquired program data.

With reference to the fourth aspect, in a first possible implementation manner of the fourth aspect, the processor is configured to, when the control instruction received by the first interface is a second control instruction for entering a normal startup mode, enter the normal startup mode according to the second control instruction, where the normal startup mode is a startup mode in which the terminal device reads data in a built-in non-volatile flash memory and normally starts according to the read data.

With reference to the fourth aspect, in a second possible implementation manner of the fourth aspect, the terminal device further includes a second control circuit; and
the processor is configured to drive, by using the second control circuit, the first interface to receive the control instruction that is sent by the host device and used to control the terminal device to enter the determined startup mode.

With reference to the fourth aspect, and any one possible implementation manner of the first possible implementation manner and the second possible implementation manner of the fourth aspect, in a third possible implementation manner of the fourth aspect, the first interface is further configured to send, to the host device, process data of performing data updating, where the process data of data updating is used by the host device to display a process in which the terminal device performs data updating.

Beneficial effects brought by the technical solutions provided in the embodiments of the present invention are as follows:
A terminal device starts by means of entering a startup mode determined by a host device that is connected to the terminal device; and when the startup mode of the terminal device is a forcibly loading startup mode, the terminal device acquires program data in a storage card and performs data updating according to the acquired program data. The program data of the terminal device can be directly updated by means of forcibly loading without in a manner of updating by using a network or updating by dismantling a housing. Therefore, a success rate of data updating can be improved.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for updating program data according to an embodiment of the present invention;
FIG. 2 is a flowchart of a method for updating program data according to another embodiment of the present invention;
FIG. 3 is a flowchart of a method for updating program data according to another embodiment of the present invention;
FIG. 4 is a schematic structural diagram of a host device according to another embodiment of the present invention;
FIG. 5 is a schematic structural diagram of a host device according to another embodiment of the present invention;
FIG. 6 is a schematic structural diagram of a host device according to another embodiment of the present invention;
FIG. 7 is a schematic structural diagram of a terminal device according to another embodiment of the present invention;
FIG. 8 is a schematic structural diagram of a terminal device according to another embodiment of the present invention;
FIG. 9 is a schematic structural diagram of a system for updating program data according to another embodiment of the present invention; and
FIG. 10 is a schematic diagram of a circuit connection relationship according to another embodiment of the present invention.

### DESCRIPTION OF EMBODIMENTS

Exemplary embodiments are described in detail herein, and examples of the embodiments are shown in the accompanying drawings. When the following descriptions relate to the accompanying drawings, unless otherwise specified, a same number in different drawings indicates a same or similar element. Implementation manners described in the following exemplary embodiments do not represent all implementation manners consistent with the present invention. On the contrary, they are only examples of apparatuses and methods consistent with some aspects, which are described in detail in the claims, of the present invention. Because in a relevant technology, when program data stored in an SD form product is updated, a network needs to be accessed by using a wireless communications component included in the SD form product, and the program data is updated online by using the network. When the network is unavailable, or the network is inaccessible because the wireless communications component is damaged, the program data cannot be updated. Alternatively, a PCB that has a USB interface is obtained by dismantling a housing of an SD form product, so that a storage chip downloads program data from a connected computer through the USB interface and data updating is performed according to the downloaded program data. Because a structure of the SD form product is generally not dismantlable, in a process of dismantling the housing, the housing of the product and a relevant PCB pad may be damaged; then, in this case, the program data cannot be updated, and therefore a success rate of data updating is relatively low.

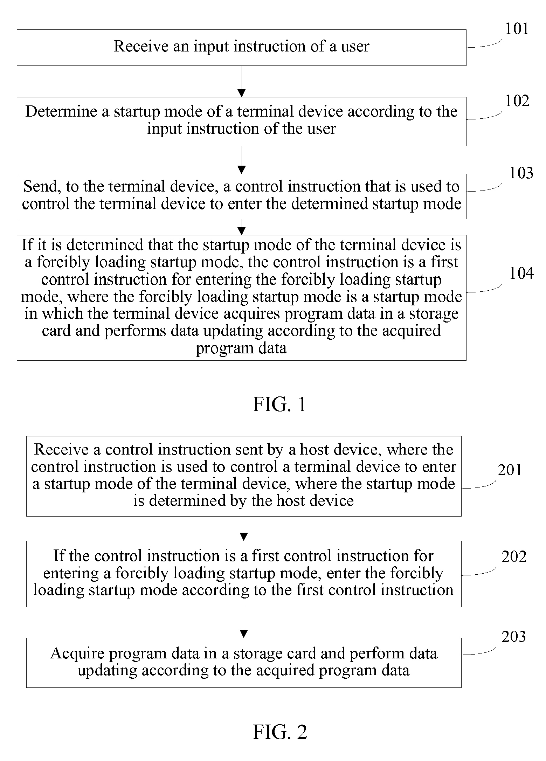

To prevent the foregoing problem and improve a success rate of data updating, an embodiment of the present invention provides a method for updating program data, where the method is applied in a host device. The host device in this embodiment and the subsequent embodiments includes but is not limited to a DC (Digital Camera, digital camera), a DV (Digital Video, digital video), a card reader, and the like. A product form of the host device is not specifically limited in this embodiment and the subsequent embodiments. Referring to FIG. 1, a procedure of the method provided in this embodiment includes the following steps:
101: Receive an input instruction of a user.
102: Determine a startup mode of a terminal device according to the input instruction of the user.
103: Send, to the terminal device, a control instruction that is used to control the terminal device to enter the determined startup mode.
104: If it is determined that the startup mode of the terminal device is a forcibly loading startup mode, the control instruction is a first control instruction for entering the forcibly loading startup mode, where the forcibly loading startup mode is a startup mode in which the terminal device acquires program data in a storage card and performs data updating according to the acquired program data.

Optionally, if it is determined that the startup mode of the terminal device is a normal startup mode, the control instruction is a second control instruction for entering the normal startup mode, where the normal startup mode is a startup mode in which the terminal device reads data in a built-in non-volatile flash memory and normally starts according to the read data.

Optionally, after the sending, to the terminal device, a control instruction that is used to control the terminal device to enter the determined startup mode, the method further includes the following step:
Receive process data of performing data updating sent by the terminal device, and display, according to the process data, a process in which the terminal device performs data updating.

According to the method provided in this embodiment, a control instruction that is used to control a terminal device to enter a determined startup mode is sent to the terminal device; when the startup mode of the terminal device is a forcibly loading startup mode, the terminal device is controlled to enter the forcibly loading startup mode; and the terminal device acquires program data in a storage card and performs data updating according to the acquired program data. The program data of the terminal device can be directly updated by means of forcibly loading without in a manner of updating by using a network or updating by dismantling a housing. Therefore, a success rate of data updating can be improved.

FIG. 2 is a flowchart of a method for updating program data according to another embodiment of the present invention. The another embodiment of the present invention provides the method for updating program data, where the method relates to a terminal device. The terminal device in this embodiment and the subsequent embodiments includes but is not limited to an SD data card that has a network module, and the like, and a product form of the terminal device is not specifically limited in this embodiment and the subsequent embodiments. As shown in FIG. 2, a procedure of the method provided in this embodiment includes the following steps:
201: Receive a control instruction sent by a host device, where the control instruction is used to control the terminal device to enter a startup mode of the terminal device, where the startup mode is determined by the host device.
202: If the control instruction is a first control instruction for entering a forcibly loading startup mode, enter the forcibly loading startup mode according to the first control instruction.
203: Acquire program data in a storage card and perform data updating according to the acquired program data.

Optionally, if the control instruction is a second control instruction for entering a normal startup mode, enter the normal startup mode according to the second control instruction; and
read data in a built-in non-volatile flash memory and normally start according to the read data.

Optionally, after the performing data updating according to the acquired program data, the method further includes the following step:
Send, to the host device, process data of performing data updating, where the process data of data updating is used by the host device to display a process in which the terminal device performs data updating.

According to the method provided in this embodiment, a terminal device starts by means of entering, according to a control instruction that is sent by a host device, a startup mode determined by the host device; and when the startup mode is a forcibly loading startup mode, program data in a storage card is acquired and data updating is performed according to the acquired program data. The program data can be directly updated by means of forcibly loading without in a manner of updating by using a network or updating by dismantling a housing. Therefore, a success rate of data updating can be improved.

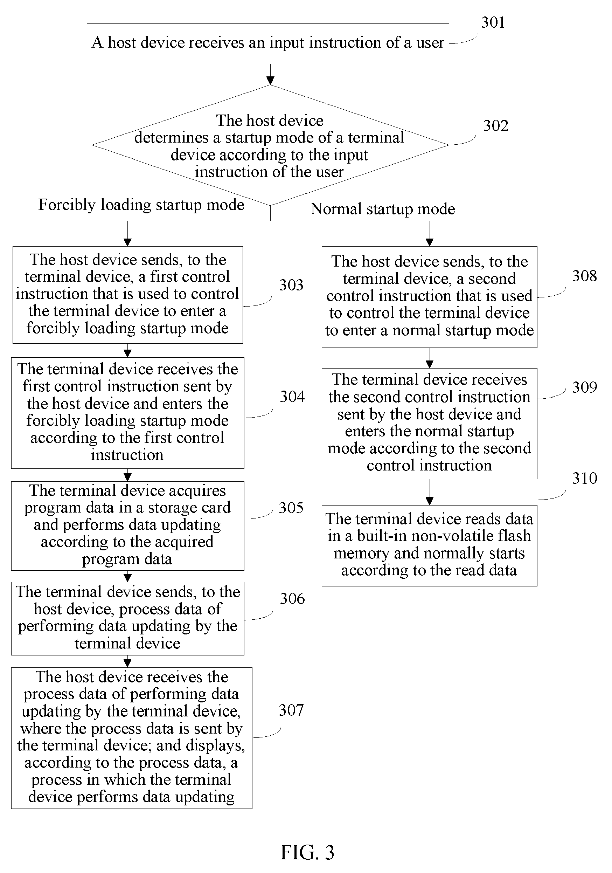

FIG. 3 is a flowchart of a method for updating program data according to another embodiment of the present invention. The another embodiment of the present invention provides the method for updating program data, where the method relates to a host device, a terminal device, a storage card, and the like. As shown in FIG. 3, a procedure of the method provided in this embodiment includes the following steps:
301: The host device receives an input instruction of a user.

The host device includes a user input module, a first processor, a first interface, and a second interface, and a structure of the host device is not limited in this embodiment. A manner for receiving the input instruction of the user by the host device includes but is not limited to: receiving the input instruction of the user by using the user input module. The user input module may be a mode selector switch, a touchscreen, a keyboard, a mouse or the like, and a product form of the user input module is not specifically limited in this embodiment. Because a user input module of a different product form has a different operating principle, for a user input module of a different product form, a manner for receiving the input instruction of the user and a specific form of the instruction are also different, which is not specifically limited in this embodiment. For example, the user toggles a physical switch by using a mode selector switch to implement input of an instruction, the user implements input of an instruction by detecting a click signal of a touchscreen in an operating interface, and a mouse and a keyboard implement input of an instruction by detecting a relevant key that the user clicks. It may be learned that a user input module of each product form receives the input instruction of the user in a different manner.

302: The host device determines a startup mode of the terminal device according to the input instruction of the user. If it is determined that the startup mode of the terminal device is a forcibly loading startup mode, step 303 is performed; and if it is determined that the startup mode of the terminal device is a normal startup mode, step 308 is performed.

Because in the foregoing step 301, there may be multiple manners for receiving the input instruction of the user by the host device, there may also be multiple manners for determining the startup mode of the terminal device by the host device according to the input instruction of the user, which is not specifically limited in this embodiment. The startup mode of the terminal device includes the forcibly loading startup mode and the normal startup mode.

To facilitate understanding, that the user input module is a mode selector switch is used as an example. The mode selector switch may have two statuses, which are a closed state and an open state; therefore, a different status of the mode selector switch is corresponding to a different input instruction of the user, and a different input instruction of the user may be corresponding to a different startup mode. For example, an input instruction of the user that is corresponding to the closed state of the mode selector switch may be associated with the forcibly loading startup mode of the terminal device, and an input instruction of the user that is corresponding to the open state of the mode selector switch may be associated with the normal startup mode of the terminal device. When the user toggles the mode selector switch to the closed state, it may be determined that the startup mode of the terminal device is the forcibly loading startup mode. When the user toggles the mode selector switch to the open state, it may be determined that the startup mode of the terminal device is the normal startup mode.

Alternatively, an input instruction of the user that is corresponding to the open state of the mode selector switch may be associated with the forcibly loading startup mode of the terminal device, and an input instruction of the user that is corresponding to the closed state of the mode selector switch may be associated with the normal startup mode of the terminal device. When the user toggles the mode selector switch to the closed state, it may be determined that the startup mode of the terminal device is the normal startup mode. When the user toggles the mode selector switch to the open state, it may be determined that the startup mode of the terminal device is the forcibly loading startup mode.

After the foregoing process, when it is determined that the startup mode of the terminal device is the forcibly loading startup mode, step 303 is performed; and when it is determined that the startup mode of the terminal device is the normal startup mode, step 308 is performed.

303: The host device sends, to the terminal device, a first control instruction that is used to control the terminal device to enter the forcibly loading startup mode.

A manner for sending the control instruction to the terminal device by the host device is not specifically limited in this embodiment, and includes but is not limited to: sending the control instruction to the terminal device according to a form of the input instruction of the user.

For example, when the user inputs an instruction by using the mode selector switch, according to content of the foregoing step 302, the mode selector switch may be in the open or closed state. Because the first interface of the host device is connected to the terminal device, if the user toggles the mode selector switch to the closed state, in this case, a mode control circuit between the host device and the terminal device is in a mutually connected state, and the host device may send the control instruction in a form of an electrical signal to the terminal device. For example, the host device is connected to a power supply, and when the mode selector switch is in the closed state, the mode control circuit between the host device and the terminal device is in the mutually connected state. In this case, a current passes through the mode control circuit between the host device and the terminal device because the circuit is connected, voltages at some connection points are in a high level state relative to a voltage at a grounding connection point, that is, corresponding electrical signals are generated. In this case, these electrical signals may be used as the control instruction sent by the host device to the terminal device.

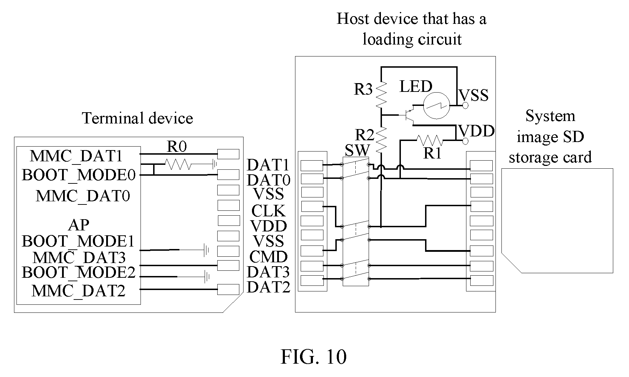

Based on the foregoing principle, to facilitate subsequent explanation and description, that it is determined that the startup mode of the terminal device is the forcibly loading startup mode when the mode selector switch is in the closed state is used as an example. Referring to FIG. 10, the terminal device is on the left, the host device is in the middle, and the storage card is on the right in the figure. An interface on the left side of the host device is the first interface, an interface on the right side of the host device is the second interface, an interface on the terminal device side is a third interface, and the first interface is connected to the third interface, so as to implement connection between the terminal device and the host device. The second interface is connected to the storage card, so as to implement connection between the host device and the storage card. In addition, the terminal device includes an AP (Application Processor, application processor), and the AP may be a processing chip, where the processing chip has several pins that are led out. As shown in FIG. 10, the pins that are led out from the processing chip include BOOT_MODE0, BOOT_MODE1, BOOT_MODE2, and the like. Certainly, in an actual situation, the pins that are led out from the processing chip may include not only the pins shown in FIG. 10, and the number of pins of the processing chip is not specifically limited in this embodiment. To facilitate explanation and description, four startup mode control pins are used as an example in this embodiment of the present invention, that is, in addition to the foregoing three pins, one BOOT_MODE3 is further included, and the startup mode is controlled by using the four pins.

The startup mode may be controlled by using level values of the four pins BOOT_MODE0, BOOT_MODE1, BOOT_MODE2, and BOOT_MODE3, and for a specific control manner, reference is made to the following Table 1:

**Table 1**

| BM[3] | BM[2] | BM[1] | BM[0] | Startup mode | Startup address |
|---|---|---|---|---|---|
| 1 | 0 | 0 | 0 | Off-chip NAND Flash startup | 0x0000_0000 |
| 1 | 0 | 0 | 1 | Insecure eMMC startup | 0xFFFF_0000 |
| 1 | 0 | 1 | 0 | Insecure USB startup | 0xFFFF_0000 |
| 1 | 0 | 1 | 1 | Insecure UART startup | 0xFFFF_0000 |
| 1 | 1 | 0 | 0 | Insecure E2RPOM startup | 0xFFFF_0000 |
| ... | ... | ... | ... | ... | ... |

As shown in Table 1, there are multiple startup modes in Table 1. The off-chip non-volatile flash memory NAND (Not AND) Flash startup is the normal startup mode, and the insecure eMMC (Embedded Multi Media Card, embedded memory) startup is the forcibly loading startup mode. Each startup mode has a corresponding startup address, where the address is a location of code, which needs to be run, in storage space during startup. In addition, BM[3] in Table 1 is BOOT_MODE3, BM[2] is BOOT_MODE2, BM[1] is BOOT_MODE1, and BM[0] is BOOT_MODE0. The startup mode of the terminal device can be controlled by setting level values of the four pins to different level values.

To ensure that the terminal device starts in the forcibly loading startup mode or the normal startup mode, in FIG. 10, the pin BOOT_MODE1 and the pin BOOT_MODE2 are grounded to ensure that the two pins are always in low levels. Referring to Table 1, because BOOT_MODE3 is always set to a high level, on a basis that both the pins BOOT_MODE1 and BOOT_MODE2 are in low levels, controlling a level value of the pin BOOT_MODE0 may enable the terminal device to start in the forcibly loading startup mode or the normal startup mode.

In FIG. 10, a circuit related to the terminal device and the host device is a mode control circuit, and VSS and VDD in the circuit are positive and negative electrodes, respectively. After the terminal device is inserted, through the interface, into an interface slot on the left side of the host device, if the mode selector switch is closed, the positive electrode VDD, an inductor R1, an inductor R0, and a ground terminal form a closed loop. Therefore, a level value of a connection point on the left side of the inductor R0, that is, the level value of the pin BOOT_MODE0 becomes a high level. With reference to content of Table 1, in this case, the terminal device starts in the forcibly loading startup mode. Therefore, after the user toggles the mode selector switch to the closed state, the level value of the pin BOOT_MODE0 becomes a high level, which is equivalent to that the host device drives, by using the mode control circuit, the first interface to send a control instruction to the terminal device, where the control instruction is a first control instruction for entering the forcibly loading startup mode. On the contrary, after the user toggles the mode selector switch to the open state, the level value of the pin BOOT_MODE0 becomes a low level, which is equivalent to that the host device drives, by using the mode control circuit, the second interface to send a control instruction to the terminal device. In this case, however, the control instruction is a second control instruction for entering the normal startup mode.

It should be noted that, in the foregoing process, to control the startup mode of the terminal device, an extra startup pin is generally added to the processing chip in the terminal device; however, the processing chip in the terminal device generally has several built-in pins; therefore, to save a pin resource of the processing chip in the terminal device, several pins may be selected, as startup pins, from the built-in pins of the processing chip in the terminal device. Correspondingly, in the method provided in this embodiment, the built-in pins BOOT_MODE0, BOOT_MODE1, and BOOT_MODE2 of the processing chip in the terminal device are used as mode control pins, that is, startup pins. The startup mode of the terminal device is controlled by using the built-in pins, and therefore, the pin resource of the processing chip in the terminal device can be saved, which is not specifically limited in this embodiment.

304. The terminal device receives the first control instruction sent by the host device and enters the forcibly loading startup mode according to the first control instruction.

When receiving the first control instruction sent by the host device, the terminal device needs to enter the forcibly loading startup mode according to the first control instruction sent by the host device. For example, after the mode selector switch is toggled to the closed state, the level of the pin BOOT_MODE0 is a high level. After the host device drives, by controlling a mode control circuit on the host device side, the first interface to send the first control instruction to the terminal device, in this case, the terminal device may drive, by using a mode control circuit on the terminal device side, the third interface on the terminal device side to receive the first control instruction sent by the host device, and further enter the forcibly loading startup mode according to the first control instruction.

The forcibly loading startup mode indicates that the terminal device starts by using another device that is connected, where the another device may store an updated operating system program. Therefore, the terminal device may be controlled by the updated operating system program and begins a startup process until the startup is completed. In this embodiment of the present invention, the terminal device starts in the forcibly loading startup mode by using program data in the storage card connected to the second interface of the host device.

305: The terminal device acquires program data in a storage card and performs data updating according to the acquired program data.

After entering the forcibly loading startup mode according to control of the host device in the foregoing step 304, the terminal device may acquire the program data in the storage card. A manner for acquiring the program data in the storage card by the terminal device is not specifically limited in this embodiment, and includes but is not limited to: disposing a second primary controller in the terminal device in advance, and after the host device determines that the startup mode of the terminal device is the forcibly loading startup mode, controlling, by the second primary controller, the terminal device to acquire the program data in the storage card. The second primary controller may include an SDIO (Secure Digital Input and Output, Secure Digital Input and Output) interface, a DMA (Direct Memory Access, direct memory access) interface, a clock control component, a cache control component, a command control component, and the like, and composition structures of the two are not specifically limited in this embodiment.

It should be noted that, when the terminal device acquires the program data in the storage card, the terminal device is equivalent to a primary device, the storage card is equivalent to a secondary device, and the terminal device may send a data reading command to the storage card through the second primary controller, so as to read the program data in the storage card. Correspondingly, in the normal startup mode, the host device is equivalent to a primary device, the terminal device and the storage card are equivalent to secondary devices, and the host device may send a data reading command to the terminal device or the storage card through a built-in first primary controller, so as to read data in the terminal device or the storage card.

In addition, a manner for performing data updating by the terminal device according to the acquired program data is not specifically limited in this embodiment, and includes but is not limited to: replacing program data stored in a NAND of the terminal device with the acquired program data. For example, when an operating system of the terminal device needs to be updated, after an image file of the operating system stored in the storage card is acquired, the image file may be decompressed into data of an updated operating system, and data, of an operating system, previously stored in the NAND of the terminal device is replaced with the data of the updated operating system. To ensure that the terminal device is in a power-on state in a process of updating the program data, the host device may further include a power supply component, which may supply power to the terminal device through the first interface.

Optionally, after data updating is performed by using the method in the foregoing step 301 to step 305, this embodiment further provides a method for displaying a process in which terminal device performs data updating and displaying a result, and for details, reference is made to subsequent steps. In addition, to display the process in which the terminal device performs data updating and display the result, the host device may further include a display part, which is not specifically limited in this embodiment.

306: The terminal device sends, to the host device, process data of performing data updating by the terminal device.

This step is an optional step, and the process data of performing data updating by the terminal device sent by the terminal device to the host device is not specifically limited in this embodiment, where the process data includes but is not limited to a clock pulse waveform. When the process data of data updating sent by the terminal device to the host device is a clock pulse waveform, the host device may receive, by using a clock CLK pin on the first interface, a clock pulse waveform generated by the terminal device. The host device needs to acquire an input signal by using a GPIO (General Purpose InputOutput, General Purpose Input/Output) pin. Therefore, the GPIO pin in the host device may be used as the CLK pin, which is not specifically limited in this embodiment. In this case, the host device may acquire, by using the GPIO pin, the clock pulse waveform sent by the terminal device.

307: The host device receives the process data of performing data updating by the terminal device, where the process data is sent by the terminal device; and displays, according to the process data, a process in which the terminal device performs data updating.

To display the process in which the terminal device performs data updating, the host device may include the display part, where the display part may display, according to the process data sent by the terminal device, the process in which the terminal device performs data updating. To facilitate description, that the process data sent by the terminal device is the clock pulse waveform is used as an example. A manner for displaying, by the host device according to the process data, the process in which the terminal device performs data updating is not specifically limited in this embodiment, and includes but is not limited to: predefining a status or a result, corresponding to a waveform of a different frequency, of data updating performed by the terminal device; determining a frequency corresponding to each received waveform; determining, according to the frequency corresponding to each waveform, a status or a result, corresponding to each waveform, of data updating performed by the terminal device; and controlling a display manner of the display part according to the status or the result, corresponding to each waveform, of data updating performed by the terminal device, where the display part indicates, in different display manners, the process in which the terminal device performs data updating and the result.

The display part may be a part such as an LED (Light Emitting Diode, light emitting diode) indicator, which is not specifically limited in this embodiment.

For example, waveforms of three frequencies are predefined and are a first frequency, a second frequency, and a third frequency, where a waveform of the first frequency indicates that the terminal device is in a state of performing data updating, a waveform of the second frequency indicates that the terminal device fails to update data, and a waveform of the third frequency indicates that the terminal device updates data successfully. When the display part is an LED indicator, three display manners may be predefined, where a first display manner is that the LED indicator blinks, which indicates that the terminal device is in a state of performing data updating; a second display manner is that the LED indicator is steady on, which indicates that the terminal device updates data successfully; and a third display manner is that the LED indicator is steady off, which indicates that the terminal device fails to update data.

After receiving a waveform sent by the terminal device, the host device may determine a frequency corresponding to the waveform, and compares the frequency corresponding to the waveform with each of the first frequency, the second frequency, and the third frequency to determine the frequency corresponding to the waveform is the same as which frequency. When the frequency corresponding to the waveform is the same as the first frequency, it may be determined that the terminal device is in a state of perform data updating, and in this case, the LED indicator blinks. When the frequency corresponding to the waveform is the same as the second frequency, it may be determined that the terminal device updates data successfully, and in this case, the LED indicator is steady on. When the frequency corresponding to the waveform is the same as the third frequency, it may be determined that the terminal device fails to update data, and in this case, the LED indicator is steady off.

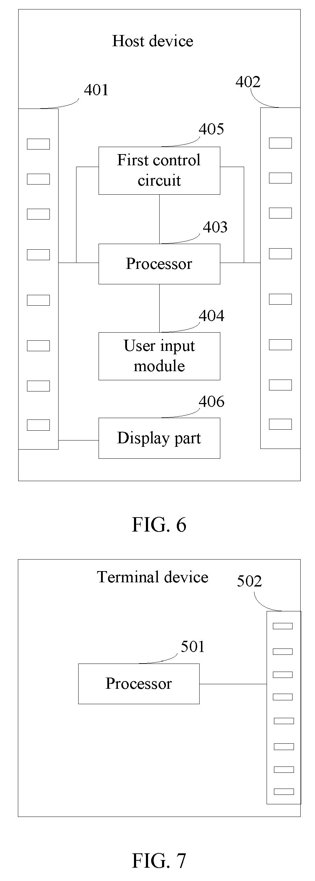

In addition, for a connection relationship among the foregoing host device, terminal device, and storage card, reference may be made to FIG. 7. In the figure, an interface on the left side of the host device is the first interface, an interface on the right side of the host device is the second interface, and the host device is connected to the terminal device through the first interface and is connected to the storage card through the second interface.

It should be noted that, the method procedure in which the terminal device enters the forcibly loading startup mode ends thereto, and for a relevant method procedure in which the terminal device enters the normal startup mode, reference is made to subsequent steps.

308. The host device sends, to the terminal device, a second control instruction that is used to control the terminal device to enter the normal startup mode.

A manner for sending the control instruction by the terminal device is not specifically limited in this embodiment. For a specific method process, reference may be made to content of the foregoing step 303, and details are not described herein again. It should be noted that, the control instruction herein is the second control instruction for entering the normal startup mode.

309: The terminal device receives the second control instruction sent by the host device and enters the normal startup mode according to the second control instruction.

A manner for receiving, by the terminal device, the control instruction sent by the host device is not specifically limited in this embodiment, and a manner for entering the normal startup mode by the terminal device is not specifically limited in this embodiment, either. For a specific method process, reference may be made to content of the foregoing step 304, and details are not described herein again.

It should be noted that, after the terminal device starts according to the normal startup mode, the host device may normally read and write data in the terminal device through the first interface, or may normally read and write data in the storage card through the second interface, which is not specifically limited in this embodiment. In addition, if the terminal device includes a wireless communications component, the host device may forward data stored in the host device to a network by using the wireless communications component in the terminal device, which is not specifically limited in this embodiment. A manner for forwarding, by the host device, the data stored in the host device to the network by using the wireless communications component in the terminal device is not specifically limited in this embodiment, and includes but is not limited to: disposing a first primary controller in the host device in advance and disposing a second secondary controller in the terminal device in advance; sending, by the first primary controller, a command and data to the second secondary controller; after the second secondary controller receives the command and the data, forwarding the command and the data to the wireless communications component; and forwarding, by the wireless communications component, the data to the network according to the command. For a composition structure of the first primary controller or the second secondary controller, reference may be made to a composition structure of the second primary controller in the foregoing step 305, and composition structures of the two are not specifically limited in this embodiment.

In addition, as shown in FIG. 10, when an SW switch is in an open state, because the positive electrode VDD, the inductor R1, the inductor R0, and the ground terminal do not form a closed loop, in this case, a level value of the pin BOOT_MODE2 does not vary with the mode control circuit in the host device and the terminal device, that is, impact on the mode control circuit is eliminated. Therefore, the terminal device can work in the normal startup mode.

It may be learned from the foregoing steps that, according to requirements of reading and writing data in different startup modes, the terminal device not only includes a second primary controller and but also includes a second secondary controller, and both the second primary controller and the second secondary controller need to be connected to pins of a control chip in the terminal device, so as to acquire or send data. Therefore, controllers to which pins are connected may be switched in a certain manner, so as to ensure that in the normal startup mode, the terminal device serves as a secondary device, and the second secondary controller interacts with the storage card; and in the forcibly loading startup mode, the terminal device serves as a primary device, and the second primary controller interacts with another secondary device, which is not specifically limited in this embodiment. A manner for switching the controllers to which the pins are connected includes but is not limited to: disposing a two-stage switch in advance, and in different startup modes, enabling the pins to be connected to different controllers by using the two-stage switch, which is not specifically limited in this embodiment.

310: The terminal device reads data in a built-in non-volatile flash memory and normally starts according to the read data.

Because a built-in NAND flash memory stores relevant programs such as bootloader and an operating system that are corresponding to the terminal device, a manner for starting by the terminal device according to program data stored locally is not specifically limited in this embodiment, and includes but is not limited to: when the terminal device is powered on, automatically executing the bootloader, and loading, by the bootloader, an operating system program to a memory of the terminal device, so that the operating system program takes over and begins to control an entire startup process of the terminal device until the startup is completed.

According to the method provided in this embodiment, a terminal device starts according to a startup mode determined by a host device; and when the startup mode of the terminal device is a forcibly loading startup mode, the terminal device acquires program data in a storage card and performs data updating according to the acquired program data. The program data of the terminal device can be directly updated by means of forcibly loading without in a manner of updating by using a network or updating by dismantling a housing. Therefore, a success rate of data updating can be improved.

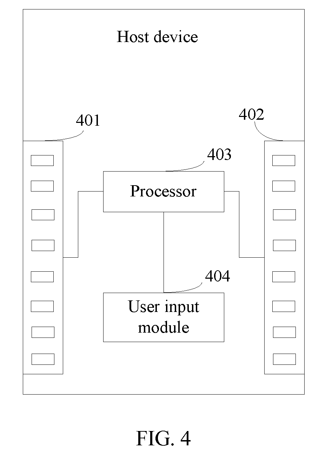

FIG. 4 is a schematic structural diagram of a host device according to another embodiment of the present invention. The another embodiment of the present invention provides the host device, where the host device is configured to perform the method performed by the host device in any embodiment of the embodiments shown in the foregoing FIG. 1 to FIG. 3. As shown in FIG. 4, the host device includes:
a first interface 401, a second interface 402, a processor 403, and a user input module 404.

The first interface 401 is connected to a terminal device, the second interface 402 is connected to a storage card, and the storage card stores program data that is used by the terminal device to perform data updating.

The user input module 404 is configured to receive an input instruction of a user.

The processor 403 is configured to determine a startup mode of the terminal device according to the input instruction of the user received by the user input module 404, and send, to the terminal device, a control instruction that is used to control the terminal device to enter the determined startup mode, where if it is determined that the startup mode of the terminal device is a forcibly loading startup mode, the control instruction sent by the processor 403 is a first control instruction for entering the forcibly loading startup mode, where the forcibly loading startup mode is a startup mode in which the terminal device acquires the program data in the storage card and performs data updating according to the acquired program data.

As an optional embodiment, if it is determined that the startup mode of the terminal device is a normal startup mode, the control instruction that is sent by the processor 403 is a second control instruction for entering the normal startup mode, where the normal startup mode is a startup mode in which the terminal device normally starts by using a built-in non-volatile flash memory.

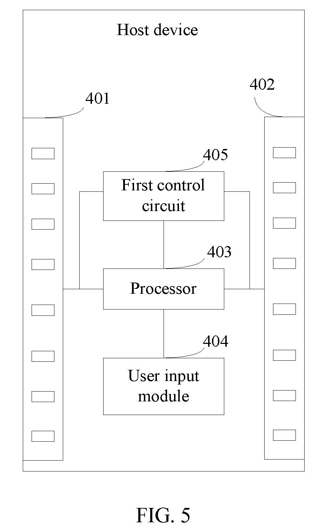

As an optional embodiment, referring to FIG. 5, the host device further includes a first control circuit 405.

The processor 403 is configured to drive, by using the first control circuit 405, the first interface 401 to send, to the terminal device, the control instruction that is used to control the terminal device to enter the determined startup mode.

As an optional embodiment, referring to FIG. 6, the host device further includes a display part 406.

The first interface 401 is configured to receive process data of performing data updating by the terminal device, wherein the process data is sent by the terminal device.

The display part 406 is configured to display, according to the process data received by the first interface 401, a process in which the terminal device performs data updating.

According to the device provided in this embodiment, a startup mode of a terminal device is determined according to an input instruction of a user; a control instruction that is used to enter the determined startup mode is sent to the terminal device; and when the startup mode of the terminal device is a forcibly loading startup mode, the terminal device acquires program data in a storage card and performs data updating according to the acquired program data. The program data of the terminal device can be directly updated by means of forcibly loading without in a manner of updating by using a network or updating by dismantling a housing. Therefore, a success rate of data updating can be improved.

FIG. 7 is a schematic structural diagram of a terminal device according to another embodiment of the present invention. The another embodiment of the present invention provides the terminal device, where the terminal device is configured to perform the method performed by the terminal device in any embodiment of the embodiments shown in the foregoing FIG. 1 to FIG. 3. As shown in FIG. 7, the terminal device includes: a processor 501 and a first interface 502.

The first interface 502 is configured to connect to a host device;
The first interface 502 is configured to receive a control instruction sent by the host device, where the control instruction is used to control the terminal device to enter a startup mode of the terminal device, where the startup mode is determined by the host device.

The processor 501 is configured to, when the control instruction received by the first interface 502 is a first control instruction for entering a forcibly loading startup mode, enter the forcibly loading startup mode according to the first control instruction; and acquire program data in a storage card, and perform data updating according to the acquired program data.

As an optional embodiment, the processor 501 is configured to, when the control instruction received by the first interface 502 is a second control instruction for entering a normal startup mode, enter the normal startup mode according to the second control instruction, where the normal startup mode is a startup mode in which the terminal device normally starts by using a built-in non-volatile flash memory.

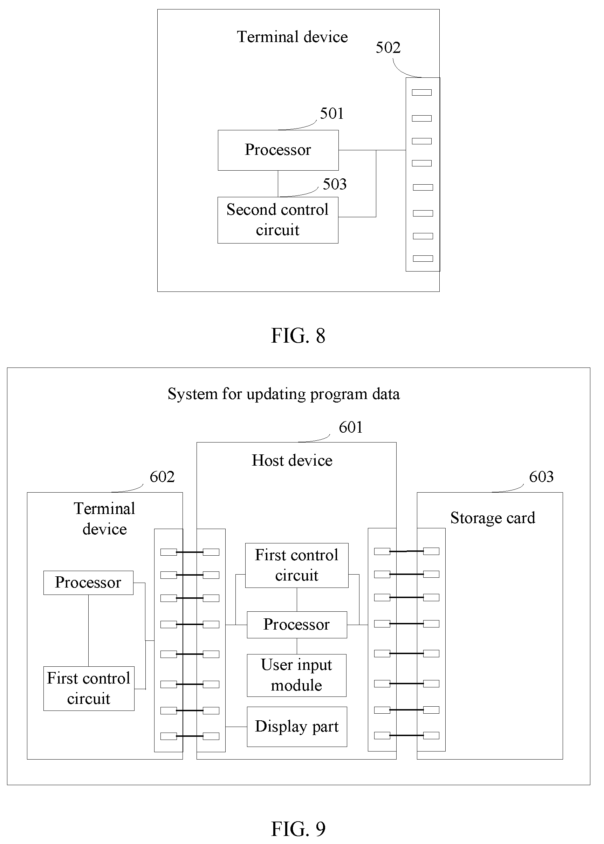

As an optional embodiment, as shown in FIG. 8, the terminal device further includes a second control circuit 503.

The processor 501 is configured to drive, by using the second control circuit 503, the first interface 502 to receive the control instruction that is sent by the host device and used to control the terminal device to enter the determined startup mode.

As an optional embodiment, the first interface 502 is further configured to send, to the host device, process data of performing data updating, where the process data of data updating is used by the host device to display a process in which the terminal device performs data updating.

According to the device provided in the present invention, a terminal device starts according to a startup mode determined by a host device; and when the startup mode is a forcibly loading startup mode, program data in a storage card is acquired and data updating is performed according to the acquired program data. The program data can be directly updated by means of forcibly loading without in a manner of updating by using a network or updating by dismantling a housing. Therefore, a success rate of data updating can be improved.

FIG. 9 is a schematic structural diagram of a system for updating program data according to another embodiment of the present invention. The another embodiment of the present invention provides the system for updating data, where the system is configured to perform the method provided in any embodiment of the embodiments shown in the foregoing FIG. 1 to FIG. 3. As shown in FIG. 9, the system includes:
a host device 601, a terminal device 602, and a storage card 603.

The host device 601 is the host device provided in the foregoing embodiment. For details, reference is made to the content of the foregoing embodiment, and details are not described herein again.

The terminal device 602 is the terminal device provided in the foregoing embodiment. For details, reference is made to the content of the foregoing embodiment, and details are not described herein again.

The storage card 603 stores program data that is used by the terminal device 602 to perform data updating, and the storage card 603 is connected to the host device 601. For details, reference is made to the content of the foregoing embodiment, and details are not described herein again.

According to the system provided in this embodiment, a terminal device starts according to a startup mode determined by a host device; and when the startup mode of the terminal device is a forcibly loading startup mode, the terminal device acquires program data in a storage card and performs data updating according to the acquired program data. The program data of the terminal device can be directly updated by means of forcibly loading without in a manner of updating by using a network or updating by dismantling a housing. Therefore, a success rate of data updating can be improved.

It should be noted that, when the host device and the terminal device that are provided in the foregoing embodiments perform data updating, division of the foregoing function modules is used only as an example for description. In an actual application, the foregoing functions may be allocated to different function modules for implementation according to a requirement, that is, an internal structure of the device is divided into different function modules to implement all or a part of the functions described above. In addition, the host device and the terminal device provided in the foregoing embodiments are based on a same inventive concept as the embodiments describing the method for updating program data. For a specific implementation process, reference is made to the method embodiments, and details are not described herein again.

The sequence numbers of the foregoing embodiments of the present invention are merely for illustrative purposes but are not intended to indicate priorities of the embodiments.

A person of ordinary skill in the art may understand that all or some of the steps of the foregoing embodiments may be implemented by hardware or a program instructing relevant hardware. The program may be stored in a computer-readable storage medium. The foregoing storage medium may include: a read-only memory, a magnetic disk, or an optical disc.

The foregoing descriptions are merely exemplary embodiments of the present invention, but are not intended to limit the present invention. Any modification, equivalent replacement, and improvement made without departing from the spirit and principle of the present invention shall fall within the protection scope of the present invention.

## Claims

1. A method for updating program data, wherein the method is applied in a host device, and the method comprises:
receiving an input instruction of a user; and
determining a startup mode of a terminal device according to the input instruction of the user, and sending, to the terminal device, a control instruction that is used to control the terminal device to enter the determined startup mode, wherein
if it is determined that the startup mode of the terminal device is a forcibly loading startup mode, the control instruction is a first control instruction for entering the forcibly loading startup mode, wherein the forcibly loading startup mode is a startup mode in which the terminal device acquires program data in a storage card and performs data updating according to the acquired program data.

2. The method according to claim 1, wherein the startup mode of the terminal device comprises the forcibly loading startup mode and a normal startup mode.

3. The method according to claim 2, wherein if it is determined that the startup mode of the terminal device is the normal startup mode, the control instruction is a second control instruction for entering the normal startup mode, wherein the normal startup mode is a startup mode in which the terminal device reads data in a built-in non-volatile flash memory and normally starts according to the read data.

4. The method according to any one of claims 1 to 3, after the sending, to the terminal device, a control instruction that is used to control the terminal device to enter the determined startup mode, further comprising:
receiving process data of performing data updating sent by the terminal device, and displaying, according to the process data, a process in which the terminal device performs data updating.

5. A method for updating program data, wherein the method is applied in a terminal device, and the method comprises:
receiving a control instruction sent by a host device, wherein the control instruction is used to control the terminal device to enter a startup mode of the terminal device, wherein the startup mode is determined by the host device;
if the control instruction is a first control instruction for entering a forcibly loading startup mode, entering the forcibly loading startup mode according to the first control instruction; and
acquiring program data in a storage card and performing data updating according to the acquired program data.

6. The method according to claim 5, further comprising: if the control instruction is a second control instruction for entering a normal startup mode, entering the normal startup mode according to the second control instruction; and
reading data in a built-in non-volatile flash memory and normally starting according to the read data.

7. The method according to claim 5 or 6, after the performing data updating according to the acquired program data, further comprising:
sending, to the host device, process data of performing data updating, wherein the process data of data updating is used by the host device to display a process in which the terminal device performs data updating.

8. A host device, wherein the host device comprises a user input module, a processor, a first interface, and a second interface, wherein:
the first interface is connected to a terminal device;
the second interface is connected to a storage card, and the storage card stores program data that is used by the terminal device to perform data updating;
the user input module is configured to receive an input instruction of a user; and
the processor is configured to determine a startup mode of the terminal device according to the input instruction of the user received by the user input module, and send, to the terminal device, a control instruction that is used to control the terminal device to enter the determined startup mode, wherein if it is determined that the startup mode of the terminal device is a forcibly loading startup mode, the control instruction sent by the processor is a first control instruction for entering the forcibly loading startup mode, wherein the forcibly loading startup mode is a startup mode in which the terminal device acquires the program data in the storage card and performs data updating according to the acquired program data.

9. The host device according to claim 8, wherein if it is determined that the startup mode of the terminal device is a normal startup mode, the control instruction sent by the processor is a second control instruction for entering the normal startup mode, wherein the normal startup mode is a startup mode in which the terminal device reads data in a built-in non-volatile flash memory and normally starts according to the read data.

10. The host device according to claim 8, wherein the host device further comprises a first control circuit; and
the processor is configured to drive, by using the first control circuit, the first interface to send, to the terminal device, the control instruction that is used to control the terminal device to enter the determined startup mode.

11. The host device according to any one of claims 8 to 10, wherein the host device further comprises a display part;
the first interface is configured to receive process data of performing data updating by the terminal device, wherein the process data is sent by the terminal device; and
the display part is configured to display, according to the process data received by the first interface, a process in which the terminal device performs data updating.

12. A terminal device, wherein the terminal device comprises a processor and a first interface, wherein:
the first interface is configured to connect to a host device;
the first interface is configured to receive a control instruction sent by the host device, wherein the control instruction is used to control the terminal device to enter a startup mode of the terminal device, wherein the startup mode is determined by the host device; and
the processor is configured to, when the control instruction received by the first interface is a first control instruction for entering a forcibly loading startup mode, enter the forcibly loading startup mode according to the first control instruction; and acquire program data in a storage card, and perform data updating according to the acquired program data.

13. The terminal device according to claim 12, wherein the processor is configured to, when the control instruction received by the first interface is a second control instruction for entering a normal startup mode, enter the normal startup mode according to the second control instruction, wherein the normal startup mode is a startup mode in which the terminal device reads data in a built-in non-volatile flash memory and normally starts according to the read data.

14. The terminal device according to claim 12, wherein the terminal device further comprises a second control circuit; and
the processor is configured to drive, by using the second control circuit, the first interface to receive the control instruction that is sent by the host device and used to control the terminal device to enter the determined startup mode.

15. The terminal device according to any one of claims 12 to 14, wherein:
the first interface is further configured to send, to the host device, process data of performing data updating, wherein the process data of data updating is used by the host device to display a process in which the terminal device performs data updating.
